# EUROPÄISCHE PATENTANMELDUNG

(11) **EP 1 640 120 A1**
(43) Veröffentlichungstag der Anmeldung: **29.03.2006**
(21) Anmeldenummer: 05019163.4
(22) Anmeldetag: 02.09.2005
(51) Int. Cl.: B25J 17/02

(54) **Bewegungseinheit für einen Roboter und Verfahren zur Bearbeitung eines Werkstücks**

(30) Priorität: 24.09.2004 DE 102004046690; 22.02.2005 DE 102005009297
(71) Anmelder: Faude, Dieter, 71116 Gärtringen (DE)
(72) Erfinder: Faude, Dieter, 71116 Gärtringen (DE)
(74) Vertreter: Schuster, Müller & Partner

(57) **Zusammenfassung**

Es wird eine Bewegungseinheit für einen Roboter, der eine Plattform (8) aufweist, die über Trägerarme (7) mit Stützen (2) verbunden ist, wobei die Trägerarme (7) beiderends Gelenke (9) aufweisen und die Stützen (2) mittels einer Betätigungseinrichtung (Motor, 6) eine entsprechende vertikale Verstellung der Trägerarme (7) ermöglichen, vorgeschlagen, wobei die Bewegungseinheit an dem Gegenstandshalter der Plattform (8) des Roboters angeordnet ist und die Bewegungseinheit mindestens einen Gegenstandshalter (21) aufweist, der um mindestens eine Achse (19, 20) bewegbar ist. Zusätzlich wird ein Verfahren zur Bearbeitung eines Werkstückes (11) mittels einer Maschine, eines Roboters, odgl., vorgeschlagen, wobei zur Erhöhung der vorhandenen Freiheitsgrade für die Bearbeitung eine zusätzliche Bewegungseinheit verwendet wird, durch die die Anzahl an Freiheitsgraden um mindestens einen Freiheitsgrad erhöht wird.

## Beschreibung

### Stand der Technik

Die Erfindung geht aus von einer Bewegungseinheit für einen Roboter, der eine Plattform aufweist, die über drei Trägerarme mit drei Stützen verbunden ist, wobei die Trägerarme beiderends Gelenke aufweisen und die Stützen mittels einer Betätigungseinrichtung (Motor) eine entsprechende vertikale Verstellung der Trägerarme ermöglichen, nach der Gattung des Anspruchs 1, und von einem Verfahren zur Bearbeitung eines Werkstückes mittels einer Maschine, eines Roboters, odgl., wobei diese bzw. dieser eine vorgegebene Anzahl an Freiheitsgraden für die Bearbeitung zur Verfügung stellt, nach der Gattung des Anspruchs 10.

Derartige Roboter dienen bevorzugt dazu, ein Werkzeug, oder einen sonstigen Gegenstand, entsprechend einem vorgegebenen Programm dreidimensional zu bewegen. Derartige Automaten finden ihren Einsatz nicht nur in unzugänglichen oder gefährlichen Räumen, sondern vor allem auch als Ersatz für menschliche manuelle Tätigkeit.

Bei bekannten Industrierobotern der gattungsgemäßen Art ist an einer Plattform ein Gegenstandshalter angeordnet, der zur Aufnahme eines Werkzeuges dient. Die Führung des Gegenstandes erfolgt somit über die Bewegung der Plattform. Nachteilig ist, dass diese Führung nicht präzise durchgeführt werden kann, so dass je nach Anwendungsgebiet Schwierigkeiten unvermeidbar sind. Außerdem ist die Anzahl der Freiheitsgrade beschränkt.

### Die Erfindung und ihre Vorteile

Die erfindungsgemäße Bewegungseinheit für einen Roboter mit den kennzeichnenden Merkmalen des Anspruchs 1, hat demgegenüber den Vorteil, dass die Bewegungseinheit an dem Gegenstandshalter der Plattform anordbar ist und die Bewegungseinheit mindestens eine Achse aufweist, um die ein an der Bewegungseinheit befindlicher Gegenstandshalter bewegbar ist. Die Transformation der bestehenden Kinematik (Linapod) wird dadurch um mindestens eine zusätzliche Achse erweitert.

Nach einer vorteilhaften Ausgestaltung der Erfindung ist die Bewegungseinheit entkoppelt von der Plattform angeordnet.

Nach einer zusätzlichen vorteilhaften Ausgestaltung der Erfindung ermöglicht die Achse durch eine Dreheinheit eine Drehbewegung oder durch eine Schwenkeinheit eine Schwenkbewegung des Gegenstandshalters, wodurch eine hohe Flexibilität in der Bewegung des Gegenstandshalters bewirkt wird.

Nach einer zusätzlichen vorteilhaften Ausgestaltung der Erfindung erfolgt die Regelung und Steuerung der Bewegungseinheit durch Interpolation zur Regelung und Steuerung der Plattform. Somit kann die Programmierung des Drehwinkels frei erfolgen.

Nach einer zusätzlichen Ausgestaltung der Erfindung ermöglichen mindestens zwei Achsen durch eine Dreh-Schwenkeinheit eine Dreh- und eine Schwenkbewegung des Gegenstandshalters. Die Transformation der bestehenden Kinematik (Linapod) wird dadurch um zwei zusätzliche Achsen erweitert.

Nach einer diesbezüglichen vorteilhaften Ausgestaltung der Erfindung sind die Dreheinheit und die Schwenkeinheit voneinander entkoppelt angeordnet.

Nach einer zusätzlichen vorteilhaften Ausgestaltung der Erfindung erfolgt die Regelung und Steuerung der Dreh-Schwenkeinheit durch Orientierungsinterpolation gemeinsam mit der Regelung und Steuerung der Plattform. Somit ist eine Programmierung der Orientierung über Drehwinkel um die kartesischen Koordinatenachsen möglich.

Nach einer zusätzlichen vorteilhaften Ausgestaltung der Erfindung beträgt die Anzahl der Trägerarme und/oder der Stützen mindestens drei.

Nach einer zusätzlichen vorteilhaften Ausgestaltung der Erfindung ist die Betätigungseinrichtung eine elektromotorische Betätigungseinrichtung (6)

Das erfindungsgemäße Verfahren zur Bearbeitung (z.B. schneiden, bohren, dispensen) eines Werkstückes mittels einer Maschine, eines Roboters, odgl., mit dem kennzeichnenden Merkmal des Anspruchs 10, hat demgegenüber den Vorteil, dass für die Bearbeitung eine zusätzliche Bewegungseinheit verwendet wird, durch die die Anzahl an Freiheitsgraden um mindestens einen Freiheitsgrad erhöht wird. Durch die erhöhte Beweglichkeit eines an der Bewegungseinheit angeordneten Werkzeuges, beispielsweise durch einen zusätzlichen rotativen Freiheitsgrad, sind auch komplexe Werkstückformen bearbeitbar.

Nach einer diesbezüglichen vorteilhaften Ausgestaltung der Erfindung bewegt die Bewegungseinheit das Werkzeug und/oder das Werkstück. Der Vorteil der Anordnung der Bewegungeinheit beispielsweise am Maschinentisch, durch die ein Werkstück während der Bearbeitung bewegt wird, ist beispielsweise bei dessen Bearbeitung durch einen Laser gegeben, da die Laserzuleitung immer senkrecht bleiben kann, wodurch ihr Verschleiß, der durch häufiges Abknicken hervorgerufen wird, vermieden wird.

Nach einer zusätzlichen vorteilhaften Ausgestaltung der Erfindung wird als Bewegungseinheit eine Dreh- und/oder Schwenkeinheit verwendet.

Nach einer zusätzlichen vorteilhaften Ausgestaltung der Erfindung ist die Bewegungseinheit eine Bewegungseinheit nach einem der Ansprüche 1 bis 9.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und im folgenden näher beschrieben.
Es zeigen:
Fig. 1 eine perspektivische Ansicht eines gattungsgemäßen Roboters;
Fig. 2 eine perspektivische Ansicht eines weiteren gattungsgemäßen Roboters;
Fig. 3 eine perspektivische Ansicht einer gattungsgemäßen Plattform;
Fig. 4 eine perspektivische Ansicht einer erfindungsgemäßen Bewegungseinheit,
Fig. 5 unterschiedliche perspektivische Ansichten einer erfindungsgemäßen Bewegungseinheit.
Fig. 6 eine perspektivische Ansicht eines Roboters auf einer Aufständerung und
Fig. 7 eine perspektivische Ansicht eines Roboters, der in den Überbau einer Aufständerung integriert ist.

### Beschreibung des Ausführungsbeispiels

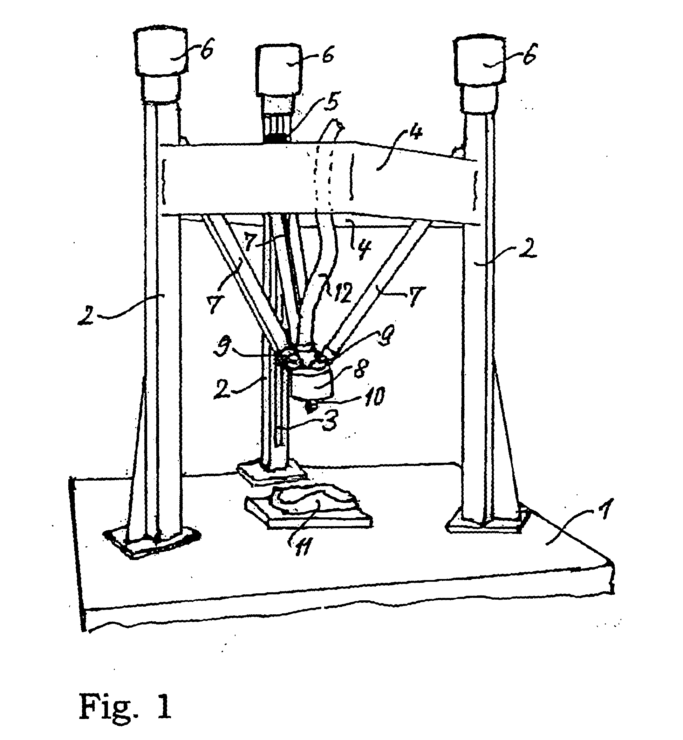

Bei dem in Fig. 1 perspektivisch dargestellten gattungsgemäßen Roboter sind auf einer Grundplatte 1 drei Stützen 2 befestigt, die als einseitig offene Profilschienen ausgebildet sind mit einem entsprechendem Öffnungsschlitz 3 und die in ihrem oberen Teil über Verbindungsrahmen 4 miteinander verbunden sind. In den Öffnungsschlitzen 3 sind Gleitschuhe 5 angeordnet und hintergreifend für eine vertikale Bewegung geführt. An den oberen Enden der Stützen 2 sind Betätigungseinrichtungen 6, beispielsweise Elektromotoren angeordnet mit wechselbarer Drehrichtung, die über nicht dargestellte Gewindespindeln die Gleitschuhe 5 antreiben. Mit den Gleitschuhen 5 sind als Trägerarme 7 dienende Doppelstangen verbunden, die andernends mit einer Plattform 8, die als Gegenstandshalter (Werkzeugkopf) dienen kann, gelenkig verbunden sind. Zur Verbindung dienen Gelenke 9, die beispielsweise als Kreuzgelenk ausgebildet sein können und mit einem Wälz- oder einem Gleitlager ausgestattet sind. An dieser Plattform 8 ist mittels einem an der Plattform 8 befindlichen Gegenstandshalters außerdem ein Werkzeug 10 angeordnet, mit dem ein auf der Grundplatte 1 angeordnetes Werkstück 11 bearbeitbar ist. Das Werkzeug 10 ist nicht antreibbar oder wird mit Hilfe einer flexiblen Welle und/oder einer (elektrischen) Versorgungsleitung 12 angetrieben.

Je nach dem welcher der drei Schuhe 5 durch die jeweilige Betätigungseinrichtung 6 und auch in welche vertikale Richtung verschoben wird, ist die Plattform 8 entsprechend über den zugeordneten Trägerarm 7 im Raum verstellbar, und zwar nach allen dreidimensionalen Richtungen. Die Motoren 6 sind mit einem nicht dargestellten elektrischen Steuergerät verbunden, in welchem ein Rechner ein jeweils eingegebenes Programm für die Roboterfunktion umsetzt. Mit diesem Steuergerät wird auch der ebenfalls nicht dargestellte Antriebsmotor der flexiblen Welle und/oder der Versorgungsleitung 12 gesteuert. Maßgebend ist, dass die aufeinander abgestimmte vertikale Führung der Schuhe 5 eine entsprechende Bewegung der Plattform 8 programmgemäß bewirkt.

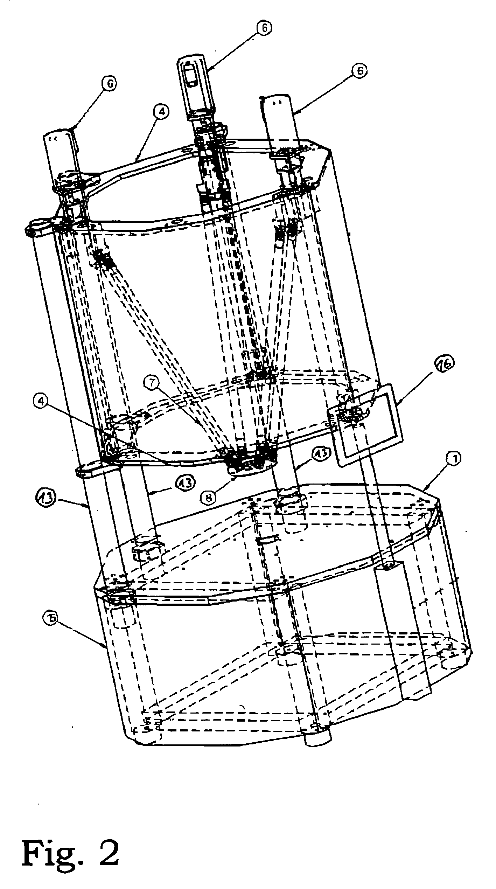

Fig. 2 zeigt eine perspektivische Ansicht eines weiteren gattungsgemäßen Roboters, bei dem drei Haltevorrichtungen 13 an drei benachbarten Ecken einer mehreckigen (z.B. sechseckigen) Grundplatte 1 angeordnet sind. Bevorzugt sind die Stützen 2 und die Verbindungsrahmen 4 mit der Haltevorrichtung 13 (und nicht mit der Grundplatte 1) verbunden, wodurch die dadurch gebildete Einheit (Basisteil) nicht ortsfest sondern frei beweglich ist und in der Höhe verstellt werden kann. Aus dem Fehlen von Haltevorrichtungen 13 an den weiteren Ecken der Grundplatte 1 ergibt sich eine ungehinderte seitliche Zugänglichkeit des Arbeitsbereiches der Plattform 8. Beispielsweise kann ein Förderband ungehindert über die Grundplatte 1 geführt werden. Bei einer Anordnung der Stützen 2 nach Fig. 1 ist eine der Stützen 2 abnehmbar ausgestaltet, wodurch die Vorrichtung mit ihrer Grundplatte 1 beispielsweise unter ein vorhandenes und montiertes Förderband geschoben und durch anschließende Montage der abgenommenen Stütze 2 vervollständigt werden kann.

Der Bereich der an den Haltevorrichtungen 13 vertikal verschieblich geführten Trägerarme mit der gelenkig daran befestigten Plattform 8 ist durch eine umlaufende, transparente Abdeckung 14 geschützt. Unterhalb der Grundplatte 1 ist ein Schrank zur Aufnahme einer nicht näher dargestellten Steuerungseinrichtung 15 vorgesehen, wodurch die gezeigte Anordnung zu einem integrierten, kompakten und autarken System wird. Die Steuerungseinrichtung 15 ist mittels einer Bedienoberfläche 16 betätigbar. Mittels der elektronischen Steuerungseinrichtung 15 werden die Elektromotoren 6 zur Bewegung der Plattform 8 angesteuert. In der Steuerungseinrichtung 15 sind auch eine Kalibrierroutine sowie Soll- und Istwerte für eine Kalibrierung gespeichert.

In der Plattform 8 kann eine vierte Schwenkachse durch eine Drehaufnahme gegeben sein, die drehbar und austauschbar an der Plattform 8 gelagert ist. Die Drehachse der Drehaufnahme liegt dabei senkrecht zur Grundfläche der Plattform 8, wobei die Drehachse als vierte antreibbare und steuerbare Achse mit der Plattform 8 mit verschwenkt wird. Es ist dadurch eine sogenannte Stuartplattform mit vier steuerbaren Achsen gebildet, deren Einsatzbereich erweitert ist. Einzelne Module können schnell ausgetauscht werden. Es sind mit geringen Anpassungsarbeiten verschiedene Anwendungen wie 2,5D-Fräsbearbeitung, Bohren, bandsynchrones Pick & Place, sowie Sonderanwendungen, bei denen hohe Kräfte in Z-Richtung (vertikal) benötigt werden (Nieten, Schneiden, Pressen, etc.) möglich.

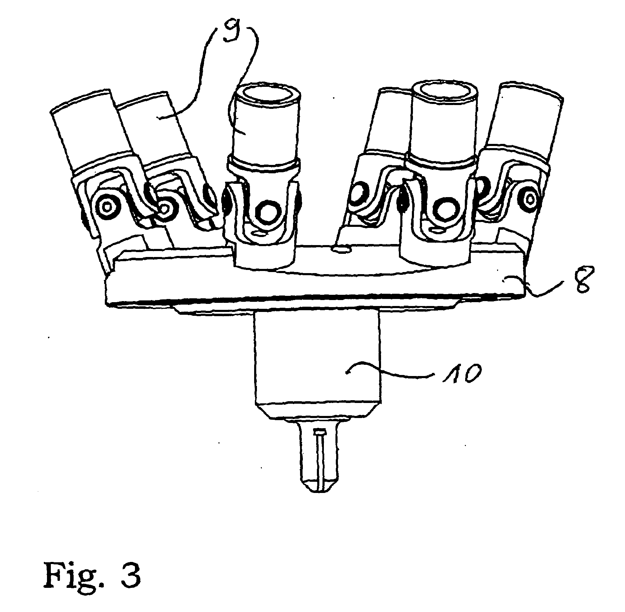

Fig. 3 zeigt eine perspektivische Ansicht einer gattungsgemäßen Plattform 8 (Stuartplattform). Als Gelenke 9 werden vorzugsweise Kardangelenke verwendet. Die Plattform 8 hält über einen Gegenstandshalter ein Werkzeug 10, das, wie hier dargestellt ein Messsensor sein kann, der für ein Kalibrierverfahren verwendbar ist.

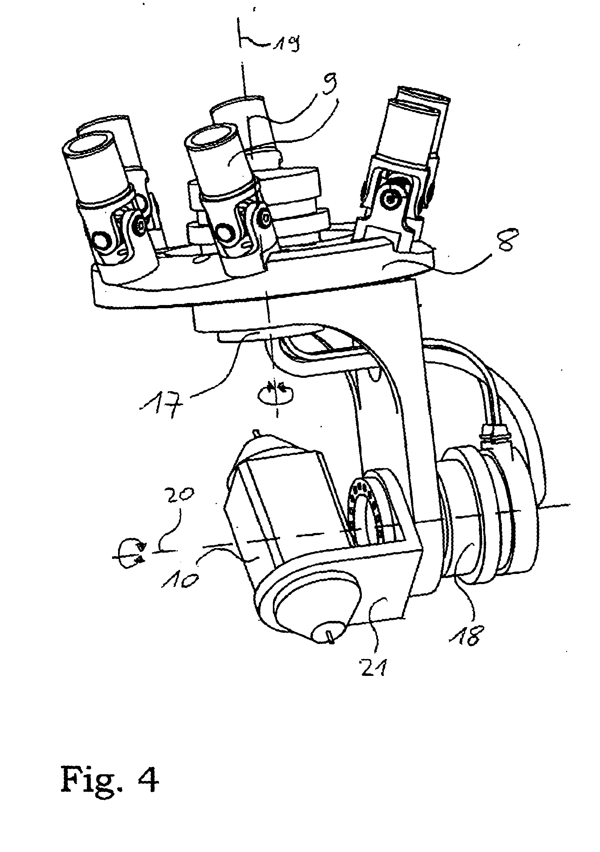

Fig. 4 zeigt eine perspektivische Ansicht einer erfindungsgemäßen Bewegungseinheit. Diese wird vorteilhafterweise anstelle des in Fig. 3 dargestellten Werkzeuges 10 an dem Roboter angeordnet. Die erfindungsgemäße Bewegungseinheit (z.B. Dreh-Schwenkeinheit) besteht aus einer Dreheinheit 17 und einer Schwenkeinheit 18. Die Dreheinheit 17 ist ohne mechanische Kopplung an der Plattform 8 (Stuartplattform) angeordnet. Senkrecht zur Plattform 8 ergibt sich somit eine als C-Achse 19 technisch beschreibbare Achse. Durch die Anbringung einer Schwenkeinheit 18 an die Dreheinheit 17, die vorteilhafterweise über eine Stuartplattform erfolgt, ergibt sich eine zusätzliche Achse, die als als A- oder B -Achsen 20 technisch beschreibbar ist. Die Dreh-Schwenkeinheit weist somit zwei zusätzliche A/C- oder B-/C-Achsen auf. An der Schwenkeinheit 18 ist mittels eines Gegenstandshalters 21 ein Werkzeug 10 angeordnet, das durch die erfindungsgemäße Bewegungseinheit und mittels der Roboterkinernatik präzise im Raum positionierbar ist. Diese Präzision wird dadurch unterstützt, dass die Bauteile extrem leicht sind, aber trotzdem eine hohe Steifigkeit zulassen. Das Werkzeug 10 ist nicht antreibbar oder wird mit Hilfe einer flexiblen Welle und/oder einer (elektrischen) Versorgungsleitung 12 angetrieben. Nicht dargestellt ist die Möglichkeit, dass das Werkzeug 10 derart am Gegenstandshalter 21 angeordnet ist, dass es ebenfalls um mindestens eine Achse dreh- und /oder schwenkbar ist.

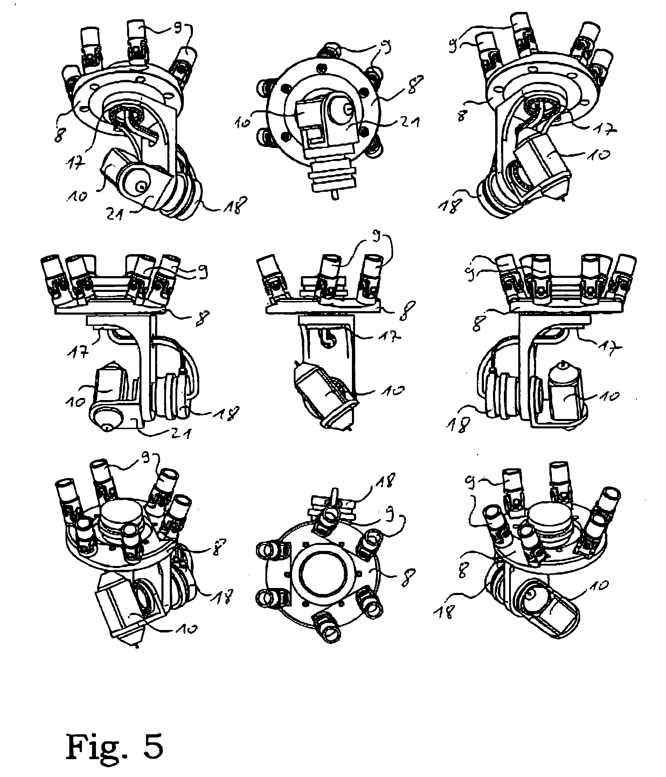

Fig. 5 zeigt unterschiedliche perspektivische Ansichten einer erfindungsgemäßen Bewegungseinheit.

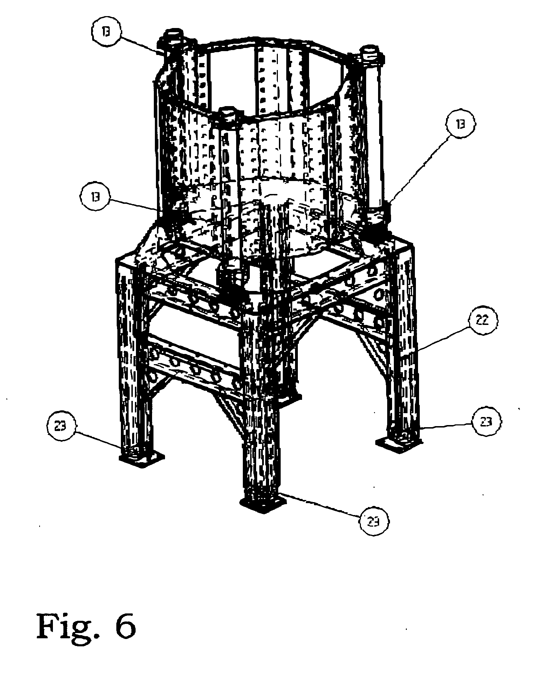

Fig. 6 zeigt eine perspektivische Ansicht eines Roboters, bei dem die drei Haltevorrichtungen 13 nicht wie in Fig. 2 an einer Grundplatte angeordnet sind, sondern an einer Aufständerung 22 (Portal). In diesem Fall ist die nicht dargestellte Steuerungseinrichtung neben dem Roboter angeordnet. Die Aufständerung 22 ist mit einer Nivelliervorrichtung 23 ausgestattet. Dadurch wird eine Überbauung beispielsweise einer vorhandenen Maschine oder eines vorhandenen Förderbandes möglich. Ein bevorzugtes Anwendungsgebiet dieses Ausführungsbeispiels ist das Handling schwerer Bauteile mit einem lageorientierten, bandsynchronen Abgreifen und Ablegen der Teile z.B. auf mehrere Bänder. Hierbei kann eine Sortierung nach Typ und Setzmuster, sowie eine Stapelung erfolgen.

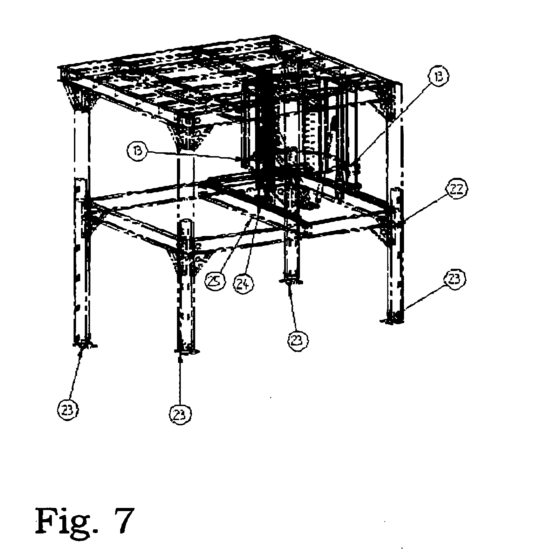

Fig. 7 zeigt eine perspektivische Ansicht eines Roboters, der in den Überbau einer Aufständerung 22 integriert ist. Der Überbau ist vorzugsweise begehbar. Die Haltevorrichtungen 13 sind über Klemmungen 24 an einer mechanisch, pneumatisch oder hydraulisch betätigbaren Horizontalverschiebeeinheit 25, durch die die gesamte Kinematik verschiebbar wird, angelenkt. Durch die Möglichkeit der 3-/4 D-Bearbeitung sind bevorzugte Anwendungsgebiete das schnelle Auftragen von Dichtungen, Klebemassen sowie Befettungen. Zusätzlich sind die Vermessung der Produktlage im Raum sowie die Koordinatentransformation und Rotation der Bahn auf die ermittelte Geometrie von Vorteil.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste:

- 1: Grundplatte
- 2: Stütze
- 3: Öffnungsschlitz
- 4: Verbindungsrahmen
- 5: Gleitschuh
- 6: Betätigungseinrichtung
- 7: Trägerarm
- 8: Plattform
- 9: Gelenk
- 10: Werkzeug
- 11: Werkstück
- 12: flexible Welle und/oder Versorgungsleitung
- 13: Haltevorrichtung
- 14: Abdeckung
- 15: Steuerungseinrichtung
- 16: Bedienoberfläche
- 17: Dreheinheit
- 18: Schwenkeinheit
- 19: C-Achse
- 20: A- oder B-Achse
- 21: Gegenstandshalter
- 22: Aufständerung
- 23: Nivelliervorrichtung
- 24: Klemmung
- 25: Horizontalverschiebeeinheit

## Patentansprüche

1. Bewegungseinheit für einen Roboter, der eine Plattform (8) mit einem Gegenstandshalter aufweist, die über Trägerarme (7) mit Stützen (2) verbunden ist, wobei die Trägerarme (7) beiderends Gelenke (9) aufweisen und die Stützen (2) mittels einer Betätigungseinrichtung (6) eine entsprechende vertikale Verstellung der Trägerarme (7) ermöglichen,
**dadurch gekennzeichnet,**
**dass** die Bewegungseinheit an dem Gegenstandshalter der Plattform (8) des Roboters angeordnet ist und die Bewegungseinheit mindestens einen Gegenstandshalter (21) aufweist, der um mindestens eine Achse (19, 20) bewegbar ist.

2. Bewegungseinheit nach Anspruch 1,
**dadurch gekennzeichnet,**
**dass** die Bewegungseinheit entkoppelt von der Plattform (8) angeordnet ist.

3. Bewegungseinheit nach Anspruch 1 oder Anspruch 2,
**dadurch gekennzeichnet,**
**dass** die Achse (19, 20) durch eine Dreheinheit (17) eine Drehbewegung oder durch eine Schwenkeinheit (18) eine Schwenkbewegung des Gegenstandshalters (21) ermöglicht.

4. Bewegungseinheit nach einem der vorhergehenden Ansprüche,
**dadurch gekennzeichnet,**
**dass** die Regelung und Steuerung der Bewegungseinheit durch Interpolation zur Regelung und Steuerung der Plattform (8) erfolgt.

5. Bewegungseinheit nach Anspruch 1 oder Anspruch 2,
**dadurch gekennzeichnet,**
**dass** mindestens zwei Achsen (19, 20) durch eine Dreh-Schwenkeinheit eine Dreh- und eine Schwenkbewegung des Gegenstandshalters (21) ermöglicht.

6. Bewegungseinheit nach Anspruch 5,
**dadurch gekennzeichnet,**
**dass** die Dreheinheit (17) und die Schwenkeinheit (18) voneinander entkoppelt angeordnet sind.

7. Bewegungseinheit nach Anspruch 5 oder Anspruch 6,
**dadurch gekennzeichnet,**
**dass** die Regelung und Steuerung der Dreh-Schwenkeinheit durch Orientierungsinterpolation gemeinsam mit der Regelung und Steuerung der Plattform (8) erfolgt.

8. Bewegungseinheit nach einem der vorhergehenden Ansprüche,
**dadurch gekennzeichnet,**
**dass** die Anzahl der Trägerarme (7) und/oder der Stützen (2) mindestens drei beträgt.

9. Bewegungseinheit nach einem der vorhergehenden Ansprüche,
**dadurch gekennzeichnet,**
**dass** die Betätigungseinrichtung (6) eine elektromotorische Betätigungseinrichtung (6) ist.

10. Verfahren zur Bearbeitung eines Werkstückes (11) mittels einer Maschine, eines Roboters, odgl., wobei diese bzw. dieser eine vorgegebene Anzahl an Freiheitsgraden für die Bearbeitung zur Verfügung stellt,
**dadurch gekennzeichnet,**
**dass** für die Bearbeitung eine zusätzliche Bewegungseinheit verwendet wird, durch die die Anzahl an Freiheitsgraden um mindestens einen Freiheitsgrad erhöht wird.

11. Verfahren nach Anspruch 10,
**dadurch gekennzeichnet,**
**dass** die Bewegungseinheit das Werkzeug (10) und/oder das Werkstück (11) bewegt.

12. Verfahren nach Anspruch 10 oder Anspruch 11,
**dadurch gekennzeichnet,**
**dass** als Bewegungseinheit eine Dreh- (17) und/oder Schwenkeinheit (18) verwendet wird.

13. Verfahren nach einem der Ansprüche 10 bis 12,
**dadurch gekennzeichnet,**
**dass** die Bewegungseinheit eine Bewegungseinheit nach einem der Ansprüche 1 bis 9 ist.
